(19)

Europäisches Patentamt

European Patent Office

Office européen des brevets

(11) **EP 4 610 408 A1**

(12) **EUROPEAN PATENT APPLICATION**
published in accordance with Art. 153(4) EPC

(43) Date of publication:
**03.09.2025 Bulletin 2025/36**

(21) Application number: **23882771.1**

(22) Date of filing: **27.10.2023**

(51) International Patent Classification (IPC):
**C25D 5/26** (2006.01)     **C25D 5/50** (2006.01)

(52) Cooperative Patent Classification (CPC):
**C25D 5/36; C25D 5/50**

(86) International application number:
**PCT/JP2023/038957**

(87) International publication number:
**WO 2024/090569 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2022 JP 2022173719**

(71) Applicant: **Toyo Kohan Co., Ltd.**
**Tokyo 141-8260 (JP)**

(72) Inventors:
• **WATANABE, Takahiro**
**Kudamatsu-shi, Yamaguchi 744-8611 (JP)**

• **UEHARA, Kaori**
**Kudamatsu-shi, Yamaguchi 744-8611 (JP)**
• **HASHIMOTO, Yusuke**
**Kudamatsu-shi, Yamaguchi 744-8611 (JP)**
• **TSUTSUMI, Etsuro**
**Kudamatsu-shi, Yamaguchi 744-8611 (JP)**
• **HORIE, Shinichirou**
**Kudamatsu-shi, Yamaguchi 744-8611 (JP)**
• **MATSUSHIGE, Daisuke**
**Kudamatsu-shi, Yamaguchi 744-8611 (JP)**

(74) Representative: **Kraus & Lederer PartGmbB**
**Thomas-Wimmer-Ring 15**
**80539 München (DE)**

(54) **SURFACE-TREATED STEEL SHEET AND BATTERY CONTAINER**

(57)     Provided is a surface-treated steel sheet comprising a steel sheet, and an Fe-Ni diffusion layer formed on the topmost surface of at least one surface of the steel sheet, wherein when a maximum diffraction intensity $I_A$ at a diffraction angle $2\theta$ of 43.00° or more and 44.30° or less and a maximum diffraction intensity $I_B$ at a diffraction angle $2\theta$ of 44.51° or more and 45.00° or less are obtained by thin film X-ray diffractometry performed on the surface of the Fe-Ni diffusion layer, the ratio $I_B/I_A$ is $0.01 \leq I_B/I_A \leq 0.37$.

Fig. 7

EP 4 610 408 A1

**Description**

TECHNICAL FIELD

The present invention relates to a surface-treated steel sheet and a battery container.

BACKGROUND ART

Traditionally, Ni-plated steel sheets have been widely used as materials for battery containers. Patent Document 1 discloses a surface-treated steel sheet for a battery container including an iron-nickel diffusion layer for preventing pitting corrosion and solution leakage, the iron-nickel diffusion layer being formed by forming a nickel-plating layer on a steel sheet and then performing a thermal diffusion treatment, wherein the ratio of Ni to Fe in the outermost layer is controlled.

RELATED ART DOCUMENTS

PATENT DOCUMENTS

Patent Document 1: JP 2014-47359 A

SUMMARY OF THE INVENTION

PROBLEM TO BE SOLVED BY THE INVENTION

However, as battery capacity increases, a battery container formed from the surface-treated steel sheet disclosed in Patent Document 1 causes a problem that when abnormality occurs in a battery management system or overdischarge occurs in an aging step in the production of batteries, the potential of the Fe-Ni diffusion layer becomes close to the positive electrode potential so that iron may be eluted from the Fe-Ni diffusion layer into the electrolyte solution, resulting in corrosion of the inner wall of the battery container. As battery capacity increases, the positive electrode potential tends to become higher, which leads to a demand for a surface-treated steel sheet including an Fe-Ni diffusion layer having higher electrolyte solution resistance during overdischarge.
An object of the present invention is to provide a surface-treated steel sheet including an Fe-Ni diffusion layer having high electrolyte solution resistance during overdischarge.

MEANS FOR SOLVING PROBLEMS

The present inventors, who have conducted extensive research to achieve the above object, have found that the above object can be achieved, in a surface-treated steel sheet including a steel sheet and an Fe-Ni diffusion layer formed on the topmost surface of at least one surface of the steel sheet, by properly controlling the ratio of maximum diffraction intensities at certain diffraction angles within predetermined ranges obtained by thin film X-ray diffractometry, and have completed the present invention.

[1] Specifically, a first mode according to the present invention provides a surface-treated steel sheet comprising a steel sheet, and an Fe-Ni diffusion layer formed on at least one surface of the steel sheet, wherein when a maximum diffraction intensity $I_A$ at a diffraction angle $2\theta$ of 43.00° or more and 44.30° or less and a maximum diffraction intensity $I_B$ at a diffraction angle $2\theta$ of 44.51° or more and 45.00° or less are obtained by thin film X-ray diffractometry performed on the surface of the Fe-Ni diffusion layer, the ratio $I_B/I_A$ is $0.01 \leq I_B/I_A \leq 0.37$.
[2] A second mode according to the present invention provides the surface-treated steel sheet according to mode 1, wherein a full width at half maximum B-for the maximum diffraction intensity $I_A$ at a diffraction angle $2\theta$ of 43.00° or more and 44.30° or less obtained by thin film X-ray diffractometry performed on the surface of the Fe-Ni diffusion layer is 0.35 or more.
[3] A third mode according to the present invention provides the surface-treated steel sheet according to mode 1 or 2, wherein the Fe-Ni diffusion layer has a thickness of 0.5 to 4 $\mu$m.
[4] Mode 4 according to the present invention provides the surface-treated steel sheet according to any one of modes 1 to 3, wherein the amount of Ni deposited on the steel sheet is 1.78 to 8.9 g/m$^2$.
[5] Mode 5 according to the present invention provides the surface-treated steel sheet according to any one of modes 1 to 4, wherein the steel sheet has a thickness of 0.03 to 0.9 mm.
[6] Mode 6 according to the present invention provides a battery container produced by forming and processing the surface-treated steel sheet according to any one of modes 1 to 5 such that a surface thereof including the Fe-Ni diffusion layer formed as the topmost surface faces the inside of the battery container.

EFFECTS OF THE INVENTION

The present invention provides a surface-treated steel sheet which allows a suppression in elution of iron into an electrolyte solution during overdischarge and has high electrolyte solution resistance.

BRIEF DESCRIPTION OF DRAWINGS

[Fig. 1]

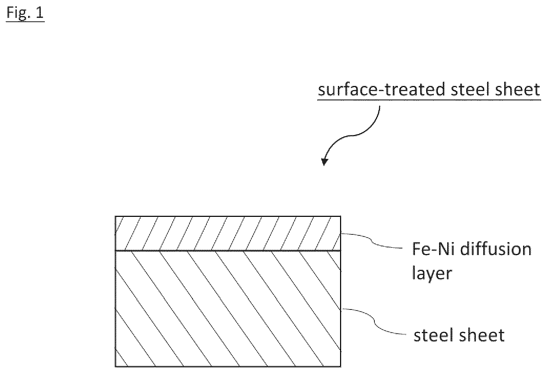

Fig. 1 is a schematic cross-sectional view showing the configuration of a surface-treated steel sheet according to an embodiment of the present invention.
[Fig. 2]

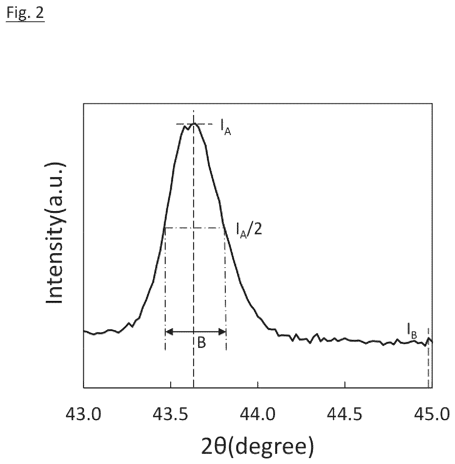

Fig. 2 is a graph showing a diffraction peak obtained by thin film X-ray diffractometry performed on a surface-treated steel sheet in Example 1.
[Fig. 3]

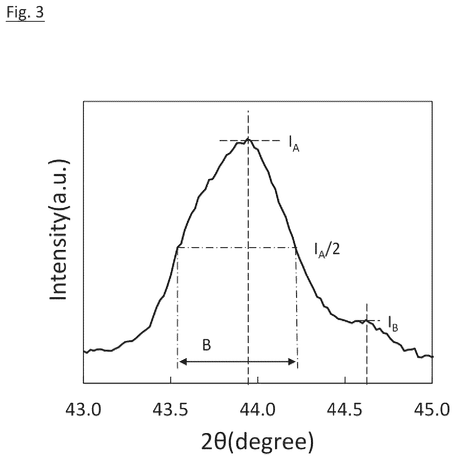

Fig. 3 is a graph showing a diffraction peak obtained by thin film X-ray diffractometry performed on a surface-treated steel sheet in Example 3.
[Fig. 4]

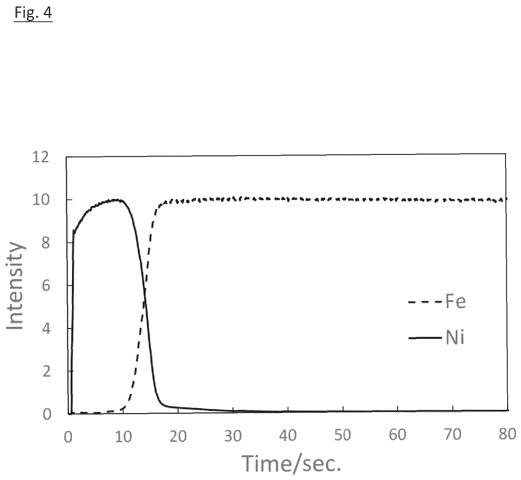

Fig. 4 is a chart obtained by radio frequency glow discharge optical emission spectrometry performed on a standard sample.
[Fig. 5]

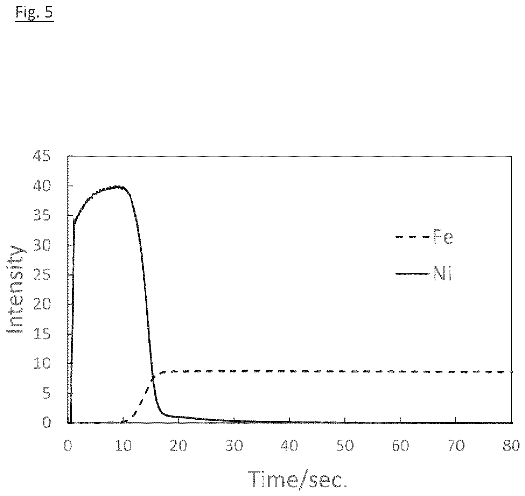

Fig. 5 is another example of a chart obtained by radio frequency glow discharge optical emission spectrometry performed on a standard sample.
[Fig. 6]

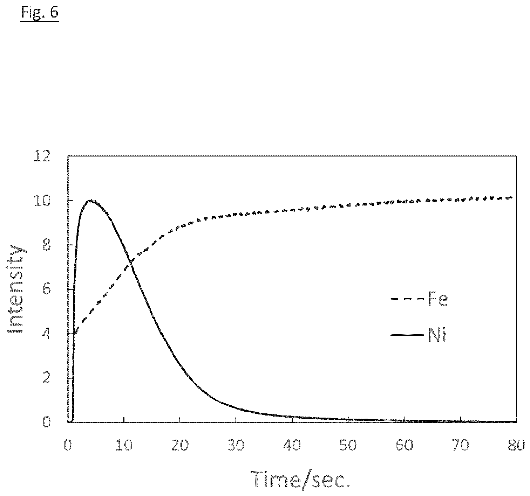

Fig. 6 is a chart obtained by radio frequency glow discharge optical emission spectrometry performed on a surface-treated steel sheet in Example 4.
[Fig. 7]

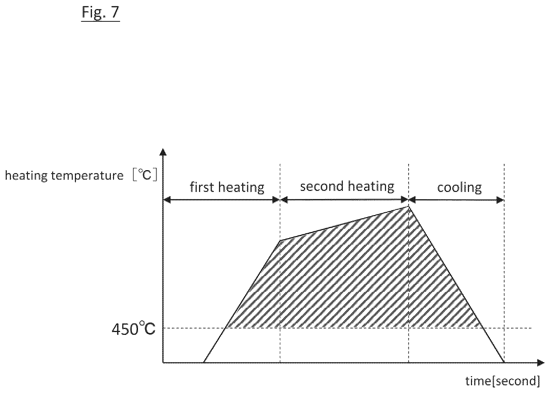

Fig. 7 is a diagram illustrating a method of calculating a thermal history Y in a thermal diffusion treatment of a steel sheet including a Ni-plating layer formed thereon in an embodiment according to the present invention.
[Fig. 8]

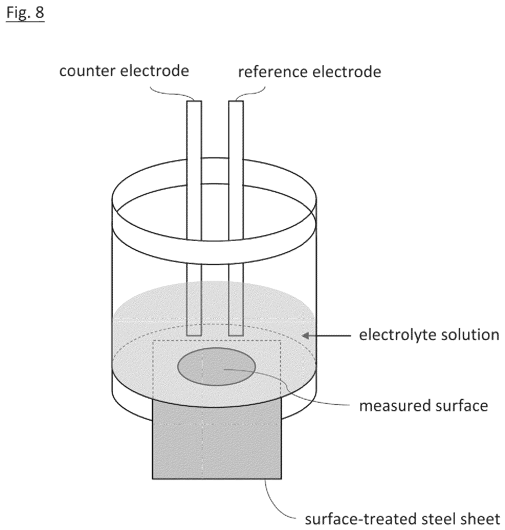

Fig. 8 is a schematic view illustrating a measurement jig used in evaluation of the electrolyte solution resistance of a surface-treated steel sheet by an LSV method.

DESCRIPTION OF EMBODIMENTS

Fig. 1 is a schematic cross-sectional view showing the configuration of a surface-treated steel sheet according to the present embodiment. As shown in Fig. 1, the surface-treated steel sheet according to the present embodiment includes a steel sheet, and an Fe-Ni diffusion layer formed on at least one surface of the steel sheet.

<Steel sheet>

The steel sheet according to the present embodiment can be any steel sheet as long as it has high formability, and is not particularly limited. For example, low carbon aluminum-killed steel (carbon content: 0.01 to 0.15% by weight), ultra-low carbon steel having a carbon content of less than 0.01% by weight, or non-aging ultra-low carbon steel formed by adding Ti or Nb to ultra-low carbon steel can be used. In the present embodiment, the followings can also be used: those obtained by pickling hot-rolled plates of these steels above to remove scale (oxidized film) on the surfaces thereof, and cold rolling the plates, followed by electrolytic cleaning, annealing, and temper rolling, those obtained by subjecting hot-rolled plates of these steels above to the cold rolling, electrolytic cleaning, and then temper rolling without annealing. From the viewpoint of productivity, a continuous steel strip is preferably used as the steel sheet.
The thickness of the steel sheet can be appropriately selected according to the application of the surface-treated steel sheet, and is not particularly limited. To reduce production costs, the thickness is preferably 1.5 mm or less, more preferably 1.25 mm or less, still more preferably 0.9 mm or less. To improve the mechanical properties of the surface-treated steel sheet, the thickness of the steel sheet is preferably 0.03 mm or more, more preferably 0.1 mm or more, still more preferably 0.15 mm or more, particularly preferably 0.2 mm or more. The thickness of the steel sheet is suitably measured using a micrometer. Alternatively, the thickness of the steel sheet may be measured by cross-sectional observation using an optical microscope or a scanning electron microscope (SEM).

<Fe-Ni diffusion layer>

The surface-treated steel sheet according to the present embodiment includes an Fe-Ni diffusion layer on the steel sheet. The Fe-Ni diffusion layer is a layer formed by forming a Ni-plating layer on the steel sheet, and then performing a thermal diffusion treatment on the steel sheet including the Ni-plating layer formed thereon to cause thermal diffusion of iron (Fe) contained in the steel sheet and nickel (Ni) contained in the Ni-plating layer.

In the surface-treated steel sheet according to the present embodiment, when a maximum diffraction intensity $I_A$ at a diffraction angle $2\theta$ of 43.00° or more and 44.30° or less and a maximum diffraction intensity $I_B$ at a diffraction angle $2\theta$ of 44.51° or more and 45.00° or less are obtained by thin film X-ray diffractometry performed on the surface of the Fe-Ni diffusion layer, the ratio $I_B/I_A$ is $0.01 \leq I_B/I_A \leq 0.37$.

In the thin film X-ray diffractometry, the diffraction intensity at a diffraction angle $2\theta$ of 43.00° or more and 44.30° or less contains peaks of $Fe_{0.64}Ni_{0.36}$, FeNi, and $FeNi_3$. The diffraction intensity at a diffraction angle $2\theta$ of 44.51° or more and 45.00° or less contains a peak of $Fe_{0.95}Ni_{0.05}$. Thus, the ratio of the maximum diffraction intensity $I_B$ to the maximum diffraction intensity $I_A$, i.e., $I_B/I_A$ is the ratio of the diffraction intensity derived from $Fe_{0.95}Ni_{0.05}$ to the diffraction intensity derived from $Fe_{0.64}Ni_{0.36}$, FeNi, and $FeNi_3$ in the Fe-Ni diffusion layer, and is an index of a relative proportion of presence. The crystal structures and diffraction peaks of these are based on the following database:

$Fe_{0.64}Ni_{0.36}$: ICDD PDF card 00-047-1405
FeNi: ICDD PDF card 01-071-8322
$FeNi_3$: ICDD PDF card 01-071-8323
$Fe_{0.95}Ni_{0.05}$: ICDD PDF card 01-071-8328

From the viewpoint of the electrolyte solution resistance during overdischarge, the ratio of the maximum diffraction intensities $I_B/I_A$ is $0.01 \leq I_B/I_A \leq 0.37$, preferably $0.01 \leq I_B/I_A \leq 0.3$, more preferably $0.02 \leq I_B/I_A \leq 0.15$, still more preferably $0.036 \leq I_B/I_A \leq 0.15$, particularly preferably $0.036 \leq I_B/I_A \leq 0.094$.

In X-ray diffraction by a thin film method (parallel beam method (hereinafter, also referred to as thin film X-ray diffraction) in which the X-ray penetration depth to a sample is logically 0.11 $\mu m$ or less, the crystal state of a portion closer to the surface of the sample can be measured than by X-ray diffraction by a focusing method in which the penetration depth is several to several dozens micrometers. When the ratio $I_B/I_A$ of the maximum diffraction intensities is $0.01 \leq I_B/I_A \leq 0.37$ in the surface-treated steel sheet according to the present embodiment, the state of the Fe-Ni alloy on the topmost surface is appropriately controlled, resulting in high electrolyte solution resistance during overdischarge and a suppression in corrosion caused by elution of iron. Although not clarified, the present inventors infer why high electrolyte solution resistance during overdischarge is obtained as follows. In the process of development of the nickel-plated steel sheet for a battery, the present inventors have found that while the potential in usual charge/discharge of the lithium ion battery causes no problem in electrolyte solution resistance, the electrolyte solution resistance during overdischarge may reduce in some cases. Then, they have focused on the surface of the nickel-plated steel sheet. Conventionally, it is considered that when the Fe-Ni diffusion layer is located on the topmost surface, the anticorrosiveness depends on the compositional ratio of iron to nickel on the surface. However, they have found that in the surface layer of the surface-treated steel sheet, irrespective of that the surface iron compositional ratio obtained by GDS described later or the like is less than 90%, part of crystal grains of the surface layer may be $Fe_{0.95}Ni_{0.05}$ in some cases. As a result of further extensive research, the present inventors have revealed that the electrolyte solution resistance during overdischarge reduces in a state where the ratio $I_B/I_A$ obtained by analysis by thin film X-ray diffraction is too large, that is, in a state where the amount of $Fe_{0.64}Ni_{0.36}$, FeNi, and $FeNi_3$ is too small relative to that of $Fe_{0.95}Ni_{0.05}$ which cannot be recognized by GDS or the like, and have found that the problem can be solved by controlling the ratio $I_B/I_A$ within an appropriate range. In other words, it can be considered that by controlling the ratio $I_B/I_A$ within an appropriate range, formation of $Fe_{0.95}Ni_{0.05}$ in the surface layer can be suppressed, or even if $Fe_{0.95}Ni_{0.05}$ is formed, the crystal structure in an alloy state of $Fe_{0.64}Ni_{0.36}$, FeNi, or/and $FeNi_3$ having high electrolyte solution resistance during overdischarge can be sufficiently formed, resulting in high electrolyte solution resistance during overdischarge.

The maximum diffraction intensity $I_A$ and the maximum diffraction intensity $I_B$ can be obtained by the following method. Initially, the diffraction pattern of the surface of the Fe-Ni diffusion layer included in the surface-treated steel sheet is obtained by the thin film X-ray diffraction method using an X-ray diffractometer. The background is removed from the obtained diffraction pattern, and the maximum value (peak top) of the diffraction intensity at $2\theta$ of 43.00° to 44.30° is defined as the maximum diffraction intensity $I_A$. Likewise, the maximum value (peak top) of the diffraction intensity at $2\theta$ of 44.51° to 45.00° is defined as the maximum diffraction intensity $I_B$.

Furthermore, in the present embodiment, by controlling a full width at half maximum B for the maximum diffraction intensity $I_A$ at $2\theta$ of 43.00° to 44.30° (the absolute value of the difference between two diffraction angles $2\theta$ at the half of the diffraction intensity $I_A/2$ at $2\theta$ of 43.00° to 44.30°) such that the full width at half maximum B is 0.35 or more, particularly favorable electrolyte solution resistance during overdischarge can be obtained. The full width at half maximum B is preferably 0.35 or more, more preferably 0.40 or more, still more preferably 0.43 or more. The upper limit of the full width at half maximum B is 1.3 or less, although not particularly limited thereto. The reason why favorable electrolyte solution resistance can be obtained by controlling the full width at half maximum B within the above ranges is not clarified, but is considered as follows. In the present embodiment, the diffraction intensity appearing at $2\theta$ of 43.00° to 44.30° includes the diffraction peaks of a (111) plane of the crystal structure of $Fe_{0.64}Ni_{0.36}$, FeNi, or/and $FeNi_3$. When the layer is formed from only one of these alloys or is formed dominantly from one of these alloys, the diffraction peak is sharp and the full width at half maximum B is narrow (see Fig. 2). In contrast, when the layer contains a plurality of alloys, these alloys have lattice planes with short intervals and thus similar crystal structures. Thus, it is considered that the diffraction peaks thereof appear as a composite diffraction peak, resulting in a wider full width at half maximum B of the maximum diffraction intensity $I_A$ at $2\theta$ of 43.00° to 44.30° (see Fig. 3). It is also considered that by forming an Fe-Ni diffusion layer in a mode in which the Fe-Ni diffusion layer contains a plurality of alloys and the full width at half maximum B of the maximum diffraction intensity $I_A$ at $2\theta$ of 43.00° to 44.30° is 0.35 or more, a mixed potential can occur on the surface thereof during overdischarge to relax the difference in potential on the surface thereof, thus obtaining particularly favorable electrolyte solution resistance during overdischarge. The upper limit of the full width at half maximum B is preferably less than 1.3, although not particularly limited thereto. Fig. 2 is a graph showing the diffraction peak obtained by thin film X-ray diffractometry performed on the surface-treated steel sheet in Example 1, and Fig. 3 is a graph showing the diffraction peak obtained by thin film X-ray diffractometry performed on the surface-treated steel sheet in Example 3.

From the viewpoint of production costs, the thickness of the Fe-Ni diffusion layer is preferably 4 $\mu$m or less, more preferably 3 $\mu$m or less, still more preferably 2.5 $\mu$m or less, particularly preferably 2.0 $\mu$m or less. To improve the electrolyte solution resistance during overdischarge of the surface-treated steel sheet, the thickness of the Fe-Ni diffusion layer is preferably 0.5 $\mu$m or more, more preferably 1 $\mu$m or more, still more preferably 1.2 $\mu$m or more.

The thickness of the Fe-Ni diffusion layer can be determined using a radio frequency glow discharge optical emission spectrometer (GDS) by continuously measuring changes in Fe intensity and Ni intensity in the depth direction from the topmost surface of the Fe-Ni diffusion layer to the steel sheet in the surface-treated steel sheet. The Fe proportion on the surface of the Fe-Ni diffusion layer can also be determined using a radio frequency glow discharge optical emission spectrometer.

Specifically, the thickness of the Fe-Ni diffusion layer and the Fe proportion on the surface of the Fe-Ni diffusion layer can be determined by the following steps.

Measurement step 1: A standard sample is measured by radio frequency glow discharge optical emission spectrometry to obtain intensity data for each etching time, and the saturated value of the Fe intensity, the maximum value of the Ni intensity, and the etching rate of Ni are determined. When the saturated value of the Fe intensity and the maximum value of the Ni intensity are not the same numeric value in the measurement data of the standard sample thus obtained, the correction coefficients for Fe and Ni to give the saturated value of the Fe intensity and the maximum value of the Ni intensity having the same numeric value (e.g., 10) are determined, and all of the values of intensity data are corrected.

Measurement step 2: A target test piece of the surface-treated steel sheet is analyzed under the same analysis conditions as those in Measurement step 1 to obtain intensity data for each etching time. When the correction coefficients are used in Measurement step **1,** the values of the data of the target test piece are likewise corrected by the correction coefficients, and the subsequent steps are performed using the resulting intensity data.

Measurement step **3:** In the data obtained in Measurement step **2,** the Fe proportion and the Ni proportion are determined at each measurement point from the following equations:

```
Fe proportion = Fe intensity/(Fe intensity + Ni intensity)
```

```
Ni proportion = Ni intensity/(Fe intensity + Ni intensity)
```

Measurement step 4: In the chart obtained from the data obtained in Measurement step 3, a point at which the Ni proportion initially has a minimum value is defined as the topmost surface.

Measurement step 5: The topmost surface defined in Measurement step 4 is defined as a start point, and a point at which the Ni intensity in the data reaches 10% of the maximum value of the Ni intensity is defined as an interface point to determine the difference in etching time between the start point and the interface point. The difference in etching time is multiplied by the etching rate to determine the etching depth. The determined etching depth is the thickness of the Fe-Ni diffusion layer. The interface point indicates the interface between the Fe-Ni diffusion layer and the steel sheet.

Measurement step 6: The Fe proportion on the topmost surface defined in Measurement step 4 is the Fe proportion on the surface of the Fe-Ni diffusion layer.

Measurement step 1 will be described. In Measurement step 1, a standard sample is measured by radio frequency glow discharge optical emission spectrometry to obtain the intensity data for each etching time, and the saturated value of the Fe intensity, the maximum value of the Ni intensity, and the etching rate of Ni are verified. Initially, a standard sample including a Ni-plated steel sheet having a known thickness (or the deposited amount) of the plating layer and not subjected to a heat treatment is prepared. For example, a Ni-plated steel sheet of a low carbon steel plate having a thickness of 0.3 mm on which non-glossy Ni plating with a thickness of 1.1 $\mu$m is formed is prepared. Using this standard sample, the Fe intensity and the Ni intensity in the Ni-plated steel sheet are measured with a radio frequency glow discharge optical emission spectrometer until the Fe intensity becomes saturated. When the Fe intensity and the Ni intensity are obtained, the chart as shown in Fig. 4 can be obtained. Fig. 4 is a chart obtained by radio frequency glow discharge optical emission spectrometry performed on the standard sample. In Fig. 4, the ordinate represents the Fe intensity and the Ni intensity, and the abscissa represents the measurement time when the surface (surface on which Ni plating is formed) of the Ni-plated steel sheet is measured in the depth direction with a radio frequency glow discharge optical emission spectrometer.

From the obtained chart, the saturated value of the Fe intensity is determined. The saturated value of the Fe intensity can be determined from the change in Fe intensity per second, that is, the rate of change in the Fe intensity with respect to time (change in Fe intensity/sec). The rate of change in the Fe intensity with respect to time sharply increases when Fe is detected after the start of measurement, and decreases after the intensity reaches the maximum value, and then is steady near zero. The value of the Fe intensity when the rate of change in the Fe intensity with respect to time remains steady near zero is the saturated value of the Fe intensity. Specifically, the Fe intensity when the rate of change in the Fe intensity with respect to time is 0.02 or less is defined as the saturated value of the Fe intensity.

Next, the maximum value of the Ni intensity is determined. For example, in Fig. 4, the value of 10 in the Ni intensity at a measurement time of 9.9 seconds is the maximum value of the Ni intensity. Depending on the measurement conditions of GDS, the saturated value of the Fe intensity and the maximum value of the Ni intensity are not the same value as shown in Fig. 5. In this case, correction coefficients to be used to correct the Fe intensity and the Ni intensity are determined, respectively, so that the saturated value of the Fe intensity and the maximum value of the Ni intensity are the same value, and the subsequent steps are performed. For example, in the case of Fig. 4, where the saturated value of the Fe intensity is 10 as a reference, a correction coefficient to be used to correct the Ni intensity is determined so that the maximum value of the Ni intensity after correction is 10. Fig. 5 is another example of the chart obtained by radio frequency glow discharge optical emission spectrometry performed on the standard sample.

Next, the etching rate of Ni is determined. The etching rate can be determined based on the thickness of Ni plating and the etching time. Since Ni is considered to be present to a point at which the Ni intensity reaches 10% of the maximum value of the Ni intensity in the GDS analysis, the time from the start of measurement to a point at which the Ni intensity of the standard sample reaches 10% of the maximum value of the Ni intensity is defined as the etching time. For example, in the case of Fig. 4, the etching rate can be determined by dividing the thickness of the Ni plating of 1.1 $\mu$m by the time from the start of measurement to the point at which the Ni intensity reaches 10% of the maximum value of the Ni intensity. Since the etching rate of Ni and that of Fe are approximately equal, the thickness of the Fe-Ni diffusion layer is calculated using the etching rate of Ni determined as above in the present invention.

Measurement step 2 will be described. In Measurement step 2, the surface-treated steel sheet according to the present embodiment is analyzed by GDS. The surface-treated steel sheet according to the present embodiment as a target test piece is measured with GDS under the same conditions as those in step 1 above to obtain the Fe intensity and the Ni intensity in the surface-treated steel sheet. When the correction coefficient is used in Measurement step 1, the data of the target test piece is also corrected using the same correction coefficient as that used for the standard sample, and using the obtained intensity data, the subsequent steps are performed. Since Fe diffuses to the surface in the present embodiment, intensity data as shown in Fig. 6 is obtained, in which the Fe intensity on the surface is never 0. Fig. 6 is a chart obtained by radio frequency glow discharge optical emission spectrometry performed on the surface-treated steel sheet in Example 4. In Fig. 6, the ordinate represents the Fe intensity and the Ni intensity, and the abscissa represents the measurement time when the surface (surface on which the Fe-Ni diffusion layer is formed) of the surface-treated steel sheet is measured in the depth direction with a radio frequency glow discharge optical emission spectrometer in the depth direction.

In the present embodiment, whether the surface of the surface-treated steel sheet is the Fe-Ni diffusion layer or not can be determined based on whether the Fe intensity on the surface of the surface-treated steel sheet exceeds 10% of the saturated value of the Fe intensity. When the Fe intensity of the topmost surface exceeds 10%, it can be determined that the surface is the Fe-Ni diffusion layer. Conversely, when the Fe intensity thereof does not exceed 10%, it is determined that a Ni layer is present on the Fe-Ni diffusion layer.

Measurement step 3 will be described. In Measurement step 3, the Fe proportion and the Ni proportion in each depth position of the Fe-Ni diffusion layer are determined. In the data obtained in Measurement step 2, the percentages of the numeric values of the intensities of Fe and Ni (numeric values of the intensities after correction when the correction coefficients are used) are calculated. Thereby, the Fe proportion in each time, that is, in each depth position can be determined. Namely, the Fe proportion and the Ni proportion are determined from the following equations:

```
Fe proportion = Fe intensity/(Fe intensity + Ni intensity) × 100
```

```
Ni proportion = Ni intensity/(Fe intensity + Ni intensity) × 100
```

Measurement step 4 will be described. In Measurement step 4, the depth position of the topmost surface of the Fe-Ni diffusion layer is defined. Since a signal containing noises may appear at the start of etching due to influences over the radio frequency glow discharge optical emission spectrometer caused by dirt on the surface, to accurately determine the Fe proportion of the topmost surface, a point at which the Fe proportion has the minimum value (depth position) is defined as the topmost surface of the Fe-Ni diffusion layer. The minimum value of the Fe proportion appears in the measurement time from 0 seconds to 5 seconds under usual measurement conditions.

Measurement step 5 will be described. In Measurement step 5, the thickness of the Fe-Ni diffusion layer is determined by determining the etching depth from the topmost surface to the boundary between the Fe-Ni diffusion layer and the steel sheet. The position of the topmost surface is the position defined in Measurement step 4. The boundary between the Fe-Ni diffusion layer and the steel sheet is a point (depth position) at which the Ni intensity of the target sample reaches 10% of the maximum value of the Ni intensity of the standard sample. In other words, when the maximum value of the Ni intensity of the standard sample in Step 1 is 10, a point at which the Ni intensity of the target sample determined in Step 2 is 1 is the boundary between the Fe-Ni diffusion layer and the steel sheet. To be noted, the point at which the Ni intensity is 1 is naturally a position deeper than the topmost surface, and thus, a point at which the Ni intensity is 1 at a rise of the initial period of measurement (depth position shallower than the depth position at which the Ni intensity is the maximum) is excluded. Next, the difference between the etching time from a depth position of 0 (i.e., measurement time: 0) to the topmost surface and the etching time from a depth position of 0 to the boundary between the Fe-Ni diffusion layer and the steel sheet is determined, and the difference is multiplied by the etching rate determined in Measurement step 1 to determine the thickness of the Fe-Ni diffusion layer.

Thus, utilizing the numeric values indicating the relation between the depth time determined by measurement of the Ni-plated steel sheet having a known Ni plating thickness and not subjected to a thermal diffusion treatment using a radio frequency glow discharge optical emission spectrometer (measurement time with a radio frequency glow discharge optical emission spectrometer) and the actual thickness, calculation of the thickness of the Fe-Ni diffusion layer in the surface-treated steel sheet according to the present embodiment and the thickness of the Ni plating before a heat treatment is allowed. The actual Ni plating thickness before a heat treatment can be determined by converting the amount of Ni deposited, which is determined by cross-sectional observation of the surface-treated steel sheet by SEM or X-ray fluorescence analysis thereof, into the thickness using the specific gravity of Ni.

Measurement step 6 will be described. In Measurement step 6, the Fe proportion on the topmost surface of the Fe-Ni diffusion layer is determined. The Fe proportion on the topmost surface of the Fe-Ni diffusion layer can be determined as the Fe proportion at a depth position of the topmost surface determined in Measurement step 4.

From the viewpoint of favorable welding properties, the Fe proportion (atomic %) on the topmost surface of the Fe-Ni diffusion layer is preferably 10% or more, more preferably 20% or more, still more preferably 25% or more, particularly preferably 30% or more. From the viewpoint of rust resistance during storage until the battery is assembled using the surface-treated steel sheet, the Fe proportion on the topmost surface of the Fe-Ni diffusion layer is preferably 70% or less, more preferably 60% or less, still more preferably 55% or less.

To control the ratio $I_B/I_A$ within an appropriate range, the amount of Ni deposited in the Fe-Ni diffusion layer is preferably 8.90 $g/m^2$ or less, more preferably 6.23 $g/m^2$ or less, still more preferably 5.00 $g/m^2$ or less. If the amount of Ni deposited in the Fe-Ni diffusion layer is too small, the ratio $I_B/I_A$ is likely to increase and the electrolyte solution resistance during overdischarge may reduce. For this reason, the amount of Ni deposited in the Fe-Ni diffusion layer is preferably 1.78 $g/m^2$ or more, more preferably 2.67 $g/m^2$ or more. The amount of Ni deposited can be determined by X-ray fluorescence analysis. In X-ray fluorescence analysis, metal elements contained in the surface-treated layer in the surface-treated steel sheet can be quantitated by a calibration curve method.

Although the Fe-Ni diffusion layer is formed on only one of surfaces of the steel sheet in the present embodiment as shown in Fig. 1, the surface-treated steel sheet can have any other configuration, and it is sufficient that the Fe-Ni diffusion layer is formed on at least one of the topmost surfaces of the surface-treated steel sheet. For example, the Fe-Ni diffusion layer may be formed on both of the topmost surfaces of the steel sheet. Alternatively, the Fe-Ni diffusion layer may be formed on both of the surfaces of the steel sheet, and a Ni layer may be formed on the Fe-Ni diffusion layer formed one of the surfaces. In particular, when the surface-treated steel sheet according to the present embodiment is used in a battery container in the form of a can, preferably, the Fe-Ni diffusion layer is formed as the topmost surface which will form the inner surface of the battery container while the Fe-Ni diffusion layer is formed on the surface which will form the outer surface of the battery container and a Ni layer is formed on the Fe-Ni diffusion layer. In this case, the total amount of Ni deposited contained in the Fe-Ni diffusion layer and the Ni layer is preferably 9.0 to 90 $g/m^2$.

The surface-treated steel sheet according to the present embodiment can be produced as follows.

Initially, a Ni-plating layer is formed on a steel sheet. Examples of a Ni plating bath used in formation of the Ni-plating layer include plating baths usually used, namely, a Watts bath, a sulfamic acid bath, a fluoroborate bath, a chloride bath, and the like. For example, the Ni-plating layer can be formed at a pH of 3.0 to 5.0, a bath temperature of 40 to 70°C, and a current density of 10 to 40 $A/dm^2$, using a Watts bath having a bath composition containing 200 to 350 g/L of nickel sulfate·hexahydrate, 20 to 60 g/L of nickel chloride·hexahydrate, and 10 to 50 g/L of boric acid. It is sufficient that the Ni-plating layer is formed on at least one surface of the steel sheet.

The amount W of Ni deposited onto the steel sheet as a result of formation of the Ni-plating layer is not particularly limited as long as the Fe-Ni diffusion layer as the topmost surface of the surface-treated steel sheet can be formed and the configuration can be controlled. If the amount W is too large, Fe is difficult to diffuse to the topmost surface, which leads to a necessity to increase the heat treatment temperature or the heat treatment time to achieve sufficient diffusion of Fe, and may make it difficult to control the ratio $I_B/I_A$ within an appropriate range. Thus, the amount W is preferably 8.9 $g/m^2$ or less, more preferably 6.23 $g/m^2$ or less, still more preferably 4.45 $g/m^2$ or less. On the other hand, if the amount W of Ni deposited is too small, the ratio $I_B/I_A$ is likely to increase, and the electrolyte solution resistance during overdischarge may reduce. Thus, the amount of W of Ni deposited is preferably 1.78 $g/m^2$ or more, more preferably 2.67 $g/m^2$ or more. When the Fe-Ni diffusion layer is formed on both of the surfaces of the steel sheet, preferably, the amounts W of Ni deposited on the surfaces thereof are each controlled to fall within the above ranges.

Next, the steel sheet including a Ni-plating layer formed thereon (hereinafter, referred to as Ni-plated steel sheet) is subjected to a thermal diffusion treatment to form an Fe-Ni diffusion layer.

The method of performing the thermal diffusion treatment may be either a continuous annealing method or a batch annealing method, and is not particularly limited. In the thermal diffusion treatment, the heat treatment atmosphere is preferably a non-oxidizing atmosphere or a reducing protective gas atmosphere. When a reducing protective gas atmosphere is used, for example, a mixed gas of $H_2$ and $N_2$ called HNX gas is preferably used. In the present embodiment, the thermal diffusion treatment includes a first heating step, a second heating step, and a cooling step.

The first heating step is a step of heating the Ni-plated steel sheet from ambient temperature to the start temperature of the second heating step described later (second heating start temperature). The heating rate in the first heating step is not particularly limited. Preferably, the heating rate is a heating rate higher than that of the second heating step described later.

The second heating step is a step of heating the Ni-plated steel sheet from the second heating start temperature to the maximum temperature in the heating step (hereinafter, referred to as goal temperature). The second heating start temperature is preferably 550°C or higher at which Ni in the Ni-plating layer and Fe in the steel sheet start vigorously diffusing, more preferably 600°C or higher at which Ni in the Ni-plating layer and Fe in the steel sheet start more vigorously interdiffusing, still more preferably 650°C or higher, particularly preferably 700°C or higher. From the viewpoint of formation of the Fe-Ni diffusion layer, the goal temperature is preferably less than 900°C, more preferably 850°C or lower, still more preferably 820°C or lower.

In the present embodiment, to improve the electrolyte solution resistance during overdischarge of the surface-treated steel sheet as described later, the heating rate in the second heating step (hereinafter, also referred to as second heating rate) is preferably 4°C/sec or lower, more preferably 3°C/sec or lower, still more preferably 1°C/sec or lower. To form a surface layer having a mixed phase of two or more alloys selected from $Fe_{0.64}Ni_{0.36}$, FeNi, or/and $FeNi_3$, the heating rate in the second heating step is preferably 0.1°C/sec or higher, more preferably 0.2°C/sec or higher.

The difference in temperature between the goal temperature and the second heating start temperature can be 10°C or higher, and is preferably 30°C or higher, more preferably 40°C or higher. Too small a difference in temperature leads to a short heating time in the second heating step (second heating time), and the surface layer of the Fe-Ni diffusion layer may not have a desired alloy state. In particular, when the amount of Ni deposited is 3.5 $g/m^2$ or more, by selecting the difference in temperature from the range of preferably 30°C or higher, more preferably 40°C or higher, still more preferably 60°C or higher, the surface can have the desired alloy state, thereby stably obtaining higher electrolyte solution resistance during overdischarge. The upper limit of the difference in temperature is preferably 150°C or lower, more preferably 120°C or lower, still more preferably 100°C or lower. The second heating rate is preferably 4°C/sec or lower in the present embodiment. Thus, if the difference in temperature is too large, the time in the high temperature range becomes too long. As a result, $Fe_{0.95}Ni_{0.05}$ is excessively formed, and the surface may not have the desired alloy state.

In the cooling step, the Ni-plated steel sheet heated to the goal temperature is cooled to 120°C or lower. The cooling rate is not particularly limited. To suppress generation of bad shapes or wrinkles, the cooling rate is preferably 1°C/sec to 20°C/sec, more preferably 1°C/sec to 10°C/sec.

Fig. 7 is a diagram illustrating a method of calculating a thermal history Y in the thermal diffusion treatment of the steel sheet including the Ni-plating layer formed thereon in the present embodiment.

To improve the electrolyte solution resistance during overdischarge of the surface-treated steel sheet, in the thermal diffusion treatment, the thermal history Y of the Ni-plated steel sheet through the first heating step, the second heating step, and the cooling step is preferably 150,000°C·sec or lower, more preferably 120,000°C·sec or lower, still more preferably 100,000°C·sec or lower. To suppress thermal diffusion failure, the total thermal history Y is preferably 15,000°C·sec or higher, more preferably 35,000°C·sec or higher, still more preferably 45,000°C·sec or higher. The thermal history Y can be determined from integration of change amounts at 450°C or higher of the heating temperature and the cooling temperature against the time. In other words, the shaded area in Fig. 7 corresponds to the thermal history Y in the thermal diffusion treatment. To control the thermal history Y of the Ni-plated steel sheet within the above ranges, the heating rate and the heating time can be appropriately adjusted in the first heating step, the second heating step, and the cooling step.

If the thermal history Y in the thermal diffusion treatment is too large, the ratio $I_B/I_A$ is likely to become large, and the electrolyte solution resistance during overdischarge tends to reduce. In contrast, if the thermal history Y in the thermal diffusion treatment is too small, Fe diffuses insufficiently, and the thickness of the Fe-Ni diffusion layer becomes too thin, which may reduce the electrolyte solution resistance during overdischarge, or a layer of Ni alone may be left on the topmost surface of the surface-treated steel sheet, which may reduce welding properties when the battery container is welded to an electrode lead.

The value of W/Y (ratio of the amount W of Ni deposited ($g/m^2$) to the thermal history Y) $\times 10^5$ is preferably 1.0 or more, more preferably 3.0 or more. The value of W/Y $\times 10^5$ is particularly preferably 4.5 or more to form an Fe-Ni diffusion layer including a surface layer having a mixed phase of two or more alloys selected from $Fe_{0.64}Ni_{0.36}$, FeNi, or/and $FeNi_3$ wherein the full width at half maximum B of the maximum diffraction intensity $I_A$ at 2θ of 43.00° to 44.30° is 0.35 or more. When the value of W/Y $\times 10^5$ is less than 1.0, the surface cannot have a desired alloy state, for example, contains too much $Fe_{0.95}Ni_{0.05}$. Thus, the electrolyte solution resistance during overdischarge may reduce. The value of W/Y (ratio of the amount W of Ni deposited ($g/m^2$) to the thermal history Y) $\times 10^5$ is preferably 20.0 or less, more preferably 10.0 or less. If the value of W/Y $\times 10^5$ is more than 20.0, Fe diffuses insufficiently, and the Fe-Ni diffusion layer cannot be formed as the surface. To allow a diffraction peak having a maximum diffraction intensity $I_A$ to have a full width at half maximum B of 0.35 or more, preferably, the value of W/Y $\times 10^5$ is 4.5 to 10 and the goal temperature is less than 850°C or the thermal history Y is less than 100,000.

By performing the thermal diffusion treatment on the Ni-plated steel sheet under the above conditions, Ni in the Ni-plating layer and Fe in the steel sheet can interdiffuse to form an Fe-Ni diffusion layer having a topmost surface with a crystal state appropriately controlled to satisfy $0.01 \leq I_B/I_A \leq 0.37$. Although the reason why formation of the $Fe_{0.95}Ni_{0.05}$ alloy phase can be suppressed by heating under the above conditions is not clarified, it is considered that by selecting an appropriate range of the thermal history Y in a temperature range of 450°C or higher for the amount W of Ni deposited, migration of Fe to the topmost surface can be suppressed, and formation of excess $Fe_{0.95}Ni_{0.05}$ can be suppressed. It is further considered that by continuously heating the Ni-plated steel sheet around the highest temperature, that is, at a relatively slow heating rate in the second heating step, a rapid change in crystal structure can be suppressed, the iron diffusion path can be controlled to allow homogenous diffusion, and as a result, the ratio $I_B/I_A$ in the Fe-Ni diffusion layer can be controlled within an appropriate range.

In particular, in a conventional standard method of performing a thermal diffusion treatment method on the Ni-plated steel sheet, a steel sheet is heated, followed by a soaking step of keeping the steel sheet at the highest temperature for a predetermined time, and then cooling, in which iron is diffused to the topmost surface by interdiffusion in the soaking step. In contrast, in the thermal diffusion treatment method according to the present embodiment, after the first heating is performed, the temperature does not reach the maximum temperature in the first heating; then, in the second heating step, heating is continued at a relatively mild heating rate without a soaking step of keeping the same temperature, and the cooling is performed. In other word, ease of diffusion continuously changes in the state where iron interdiffuses. Thus, compared to the conventional production method of diffusing iron by keeping a constant temperature, $Fe_{0.64}Ni_{0.36}$, FeNi, or/and $FeNi_3$ are easy to form, and a variety of crystal structures can be obtained and a mixed phase of these alloys can be obtained. As a result, compared to the thermal diffusion treatment method in which soaking is performed, the alloy state of the topmost surface of the Fe-Ni diffusion layer can be more appropriately controlled by the thermal diffusion treatment method according to the present embodiment.

As described above, a surface-treated steel sheet including the Fe-Ni diffusion layer shown in Fig. 1 is produced.

<Battery container>

The battery container according to the present embodiment is obtained by forming and processing the surface-treated steel sheet such that a surface thereof on which the Fe-Ni diffusion layer is formed faces the inside of the battery container. Specifically, the battery container according to the present embodiment can be obtained by forming the surface-treated steel sheet into a shape of a battery container by drawing, ironing, DI (Drawing and Ironing), or DTR (Draw and Thin Redraw).

Since the battery container according to the present embodiment includes the above-mentioned surface-treated steel sheet, high electrolyte solution resistance during overdischarge can be obtained, and corrosion caused by elution of Fe can be suppressed.

EXAMPLES

Hereinafter, the present invention will be more specifically described by way of Examples, but the present invention is not limited to these Examples.
Properties were evaluated by the following methods.

<Thickness of steel sheet>

Steel sheets used in Examples and Comparative Examples were measured for thickness using a micrometer.

<Amount of Ni deposited, thickness of Ni-plating layer>

The surface-treated steel sheets obtained in Examples and Comparative Examples were measured with an X-ray fluorescence analyzer to determine the amount of Ni deposited in the Fe-Ni diffusion layer. The X-ray fluorescence analyzer used was ZSX100e (available from Rigaku Corporation). In the X-ray fluorescence analysis, it was verified that metal elements contained in the surface-treated layer of the surface-treated steel sheet can be quantitated by a calibration curve method. By converting the amount of Ni deposited to the thickness by the density ($8.9 \, g/cm^3$) of Ni, the thickness of the Ni-plating layer before a heat treatment was determined.

<Thickness of Fe-Ni diffusion layer and Fe proportion>

Using a radio frequency glow discharge optical emission spectrometer (available from HORIBA, Ltd., Model No.: GD-PROFILER 2), the thickness of the Fe-Ni diffusion layer and the Fe proportion were determined.
Using a radio frequency glow discharge optical emission spectrometer, the thickness of the Fe-Ni diffusion layer and the Fe proportion can be determined according to the procedure described in Measurement steps 1 to 5 above. Specific measurement conditions for the radio frequency glow discharge optical emission spectrometer are shown below.

· measurement mode: HDD mode
· excitation mode: RF (normal)
· output: 35 W
· pressure: 600 Pa
· module: 7 V
· fuse: 7 V
· anode diameter: 4 mm
· gas replace time: 30 seconds
· preparative sputtering time: 30 seconds
· background measurement time: 10 seconds
· measurement time: 80 seconds
· acquisition interval: 0.1 seconds

<Ratio of maximum diffraction intensity on topmost surface>

A surface of the surface-treated steel sheet on which the Fe-Ni diffusion layer was formed was measured using an X-ray diffractometer (Automatic multi-purpose X-ray diffractometer Smart Lab, available from Rigaku Corporation). Specifically, X-ray diffraction was performed under the following measurement conditions.

(Configuration of apparatus)

· X-ray source: CuK$\alpha$
· optical system: thin film method (parallel beam method)

(Incident slit system)

· selected slit: PB
· soller slit: 5°
· longitudinal slit: 10 mm
· incident slit: 0.2 mm

(Receiving slit system)

· receiving slit 1: 20 mm
· receiving slit 2: 20 mm
· receiving optical element adaptor: PSA 0.114°
· receiving parallel slit adaptor: none
· detector: scintillation counter

(Parameters for measurement)

· angle of incidence: 0.4°
· tube voltage: 45 V
· tube current: 200 mA
· measurement range: $40° \leq 2\theta \leq 55°$
· scanning speed: 0.5°/min
· scan axis: $2\theta$
· scan mode: continuous

In the diffraction pattern obtained by X-ray diffractometry, the background was removed from the diffraction pattern by a Sonneveld-Visser method using thin film data processing software (available from Rigaku Corporation). Thereafter, the maximum diffraction intensity $I_A$ at a diffraction angle $2\theta$ of 43.00° or more and 44.30° or less and the maximum diffraction intensity $I_B$ at a diffraction angle $2\theta$ of 44.51° or more and 45.00° or less were determined, and the ratio $I_B/I_A$ was calculated. In the resulting diffraction pattern, the full width at half maximum B of the diffraction peak at a diffraction angle $2\theta$ of 43.00° or more and 44.30° or less was determined. Specifically, in the diffraction peak at a diffraction angle $2\theta$ of 43.00° or more and 44.30° or less, the difference between two diffraction angles $2\theta$ at which the intensities are equal to a half of the maximum diffraction intensity $I_A$ is defined as the full width at half maximum B.

<Evaluation on electrolyte solution resistance during overdischarge>

In surface-treated steel sheets, the electrolyte solution resistance during overdischarge was evaluated by Linear Sweep Voltammetry (LSV) using a multi electrochemical measurement system HZ-Pro (Model No.: HAG-PROM12, available from Hokuto Denko Corp.). The measurement was performed using the measurement jig shown in Fig. 8. Fig. 8 is a schematic view of a measurement jig used in evaluation of the electrolyte solution resistance of the surface-treated steel sheet by the LSV method. As shown in Fig. 8, a surface-treated steel sheet sample was attached to the bottom of the measurement jig, an electrolyte solution (1 mol/L $LiPF_6$, EC: DEC (1:1 v/v%), available from KISHIDA CHEMICAL Co., Ltd.) was added to the jig, and metal lithium (available from Honjo Metal Co., Ltd.) as a counter electrode and a reference electrode was attached to jig upper electrodes. The surface area of the counter electrode and that of the reference electrode were 1 $cm^2$ or more. The distance between the reference electrode and the working electrode was 2 mm, the distance between the counter electrode and the working electrode was 2 mm, and the distance between the counter electrode and the reference electrode was 12 mm. The measurement was performed in a dry room at a dew point of -40°C or lower and room temperature of 25°C. Polarization was caused from the natural potential to +4.0 V (vsLi/Li+) at a scanning rate of 2 mV/sec which corresponded to overdischarge, the current density ($nA/cm^2$) at 4.0 V was measured, and the electrolyte solution resistance during overdischarge of the surface-treated steel sheet was evaluated. A smaller current density indicates less elution of Fe and higher electrolyte solution resistance during overdischarge.

<<Example 1>>

As a substrate, a cold-rolled plate of low carbon aluminum-killed steel having a thickness of 0.3 mm was annealed to prepare a steel sheet.

Then, the prepared steel sheet was subjected to alkaline electrolytic degreasing and pickling by immersion in sulfuric acid, and electroclytic plating (Ni plating) was performed under the following conditions using a Ni plating bath having the following bath composition to form a Ni-plating layer on the surface of the steel sheet, the Ni-plating layer having a thickness of 0.5 $\mu$m and an amount W of Ni deposited of 4.45 g/m$^2$.

<Conditions for Ni plating>

Bath composition: 250 g/L of nickel sulfate·hexahydrate, 45 g/L of nickel chloride ·hexahydrate, 30 g/L of boric acid

pH: 4.0 to 5.0
bath temperature: 60°C
current density: 10 A/dm$^2$

Next, the steel sheet on which the Ni-plating layer was formed was subjected to a thermal diffusion treatment by continuous annealing to form an Fe-Ni diffusion layer. Thus, a surface-treated steel sheet was obtained. In the continuous annealing, in the first heating step, the surface-treated steel sheet was heated from ambient temperature to the second heating start temperature (temperature range of 830 to 859°C). Subsequently, in the second heating step, the goal temperature was set within a temperature range of 890 to 919°C such that the difference between the second heating temperature and the goal temperature (difference in temperature in the second heating) was 50°C, and the surface-treated steel sheet was heated at a heating rate of 0.53°C/sec. Then, in the cooling step, the surface-treated steel sheet was cooled to 120°C or lower by blowing a cooling gas such as HNX gas. The thermal history Y of the surface-treated steel sheet through the first heating step, the second heating step, and the cooling step was 115,867°C·sec.

The resulting surface-treated steel sheet was evaluated for various properties according to the above-mentioned methods. The results are shown in Table 1. The Fe-Ni diffusion layer had a thickness of 2.02 $\mu$m.

<<Example 2, Comparative Examples 1 to 4>>

Surface-treated steel sheets were obtained under the conditions where the thickness of the Ni-plating layer, the thermal history Y in the thermal diffusion treatment, and the heat treatment conditions in the second heating step, (i.e., the second heating start temperature, the second heating rate, the goal temperature, and the difference in temperature in the second heating) were varied as shown in Table 1, and were evaluated likewise. The results are shown in Table 1. In the resulting Fe-Ni diffusion layers, the thickness in Example 2 was 1.10 $\mu$m, that in Comparative Example 1 was 0.33 $\mu$m, that in Comparative Example 2 was 1.00 $\mu$m, that in Comparative Example 3 was 0.47 $\mu$m, and that in Comparative Example 4 was 2.61 $\mu$m.

[Table 1]

Tablet 1

| | | Conditions for heat treatment | | | | | | Thickness of Ni-plated layer before heat treatment | Amount W of Ni deposited | Fe-Ni diffusion layer | | | | GDS | Evaluation |
|---|---|---|---|---|---|---|---|---|---|---|---|---|---|---|---|
| | | Second heating start temperature | Second heating rate | Heating goal temperature | Temperature difference in second heating | Second heating time | Thermal history Y | W/Y ×10^5 | | | Thin film XRD | | | | Electrolyte solution resistance |
| | | | | | | | | | | | 2θ:43.00° to 44.30° | 2θ:44.51° to 45.00 | Ratio of diffraction intensities $I_B/I_A$ | Fe proportion | Current density (LSV method) |
| | | (°C) | (°C/sec) | (°C) | (°C) | (see) | (°C·sec) | | (μm) | (g/m²) | Maximum diffraction intensity $I_A$ | Maximum diffraction intensity $I_B$ | | (Atomic%) | (nA/cm²) |
| Ex. | 1 | 830-859 | 0.53 | 890-919 | 50 | 93.8 | 115,867 | 3.84 | 0.5 | 4.45 | 3,728 | 130 | 0.035 | 61.5 | 246 |
| | 2 | 710-739 | 0.81 | 800-829 | 90 | 110.7 | 87,902 | 3.04 | 0.3 | 2.67 | 8,539 | 164 | 0.019 | 58.4 | 274 |
| Comp. Ex. | 1 | 800-829 | 0.53 | 830-859 | 50 | 93.8 | 100,475 | 0.89 | 0.1 | 0.89 | 1,141 | 3,375 | 2.958 | 76.8 | 19,002 |
| | 2 | 830-859 | 0.53 | 890-919 | 50 | 93.8 | 115,867 | 0.17 | 0.1 | 0.89 | 313 | 4,698 | 15.010 | 75.1 | 40,323 |
| | 3 | 750 | 0.00 | 750 | 0 | 20.0 | 12,921 | 6.89 | 0.1 | 0.89 | 8,774 | 3,424 | 0.390 | 60.7 | 369 |
| | 4 | 710 | 0.00 | 710 | 0 | 93.8 | 58,779 | 10.60 | 0.7 | 623 | 9,608 | 5,363 | 0.558 | 13.6 | 455 |

Table 1 shows that in the surface-treated steel sheets in which the ratio $I_B/I_A$ was $0.01 \leq I_B/I_A \leq 0.37$ where $I_A$ was a maximum diffraction intensity $I_A$ at a diffraction angle $2\theta$ of 43.00° or more and 44.30° or less obtained by thin film X-ray diffractometry performed on the surface of the Fe-Ni diffusion layer, and $I_B$ was a maximum diffraction intensity $I_B$ at a diffraction angle $2\theta$ of 44.51° or more and 45.00° or less obtained by thin film X-ray diffractometry performed on the surface of the Fe-Ni diffusion layer, the current density attributed to elution of Fe at 4.0 V corresponding to overdischarge was small, and the electrolyte solution resistance during overdischarge was excellent (Examples 1 to 10).

In contrast, the surface-treated steel sheets in which the ratio of the maximum diffraction intensities $I_B/I_A$ exceeded 0.37 had poor electrolyte solution resistance during overdischarge (Comparative Examples 1 to 4).

Compared between Example 1 and Comparative Example 3, irrespective of a larger Fe proportion in Example 1, the current density in the evaluation of the electrolyte solution resistance during overdischarge by the LSV method was reduced by 33% (123 nA/cm$^2$), and superiority of the surface-treated steel sheet in which the ratio $I_B/I_A$ was controlled can be recognized.

In Examples 1 and 2, the full width at half maximum B was evaluated. The results are shown in Table 2.

<<Examples 3 to 8>>

Surface-treated steel sheets were obtained under the conditions where the thickness of the Ni-plating layer, the thermal history Y in the thermal diffusion treatment, and the heat treatment conditions in the second heating step (i.e., the second heating start temperature, the second heating rate, the goal temperature, and the difference in temperature in the second heating) were varied as shown in Table 2, and the ratio of diffraction intensities, the full width at half maximum B, and the electrolyte solution resistance during overdischarge were evaluated. The results are shown in Table 2.

[Table 2]

Table 2

| | | Conditions for heat treatment | | | | | | | Thickness of Ni-plated layre before heat treatment | Amount W of Ni deposited | Fe-Ni diffusion layer | | | | | Evaluation |
| | | Second heating start temperature | Second heating rate | Heating goal temperature | Temperature difference in second heating | Second heating time | Thermal history Y | W/Y ×10^5 | | | Thin film XRD | | | | | Electrolyte solution resistance |
| | | | | | | | | | | | 2θ:43.00° to 44.30° | 2θ:44.51° to 45.00° | Ratio of diffraction intensities $I_B/I_A$ | Full width at half maximum B (degree) | | Current density (LSVmethod) |
| | | (°C) | (°C/sec) | (°C) | (°C) | (sec) | (°C · sec) | | (μm) | (g/m²) | Maximum diffraction intensity $I_A$ | Maximum diffraction intensity $I_B$ | | | | (nA/cm²) |
| Ex. | 1 | 830-859 | 0.53 | 890-919 | 50 | 94 | 115,867 | 3.84 | 0.5 | 4.45 | 3,728 | 130 | 0.035 | 0.328 | | 246 |
| | 2 | 710-739 | 0.81 | 800-829 | 90 | 111 | 87,902 | 3.04 | 0.3 | 2.67 | 8,539 | 164 | 0.019 | 0.278 | | 274 |
| | 3 | 680-709 | 0.32 | 710-739 | 30 | 94 | 58,795 | 7.57 | 0.5 | 4.45 | 5,592 | 707 | 0.126 | 0.644 | | 132 |
| | 4 | 710-739 | 0.81 | 800-829 | 90 | 111 | 87,902 | 5.06 | 0.5 | 4.45 | 8,020 | 380 | 0.047 | 0.466 | | 114 |
| | 5 | 680-709 | 2.36 | 770-779 | 95 | 40 | 30,079 | 8.88 | 0.3 | 2.67 | 6,598 | 252 | 0.038 | 0.435 | | 170 |
| | 6 | 710-739 | 0.86 | 800-829 | 75 | 88 | 75,698 | 5.88 | 0.5 | 4.45 | 6,322 | 580 | 0.092 | 0.487 | | 171 |
| | 7 | 830-859 | 0.53 | 890-919 | 50 | 94 | 115,867 | 5.38 | 0.7 | 6.23 | 10,361 | 132 | 0.013 | 0.347 | | 298 |
| | 8 | 800-829 | 0.53 | 830-859 | 50 | 94 | 100,475 | 4.43 | 0.5 | 4.45 | 6,489 | 95 | 0.015 | 0.337 | | 242 |

In Examples 3 to 8, the ratio of diffraction intensities $I_B/I_A$ was $0.01 \leq I_B/I_A \leq 0.37$, and the electrolyte solution resistance during overdischarge was excellent. Among these, the surface-treated steel sheets in which the full width at half maximum B of the maximum diffraction intensity $I_A$ was 0.35 or more had particularly excellent electrolyte solution resistance during overdischarge (Examples 3 to 6).

## Claims

1. A surface-treated steel sheet comprising:

   a steel sheet; and
   an Fe-Ni diffusion layer formed on a topmost surface of at least one surface of the steel sheet,
   wherein when a maximum diffraction intensity $I_A$ at a diffraction angle $2\theta$ of 43.00° or more and 44.30° or less and a maximum diffraction intensity $I_B$ at a diffraction angle $2\theta$ of 44.51° or more and 45.00° or less are obtained by thin film X-ray diffractometry performed on the surface of the Fe-Ni diffusion layer, the ratio $I_B/I_A$ is $0.01 \leq I_B/I_A \leq 0.37$.

2. The surface-treated steel sheet according to claim 1, wherein a full width at half maximum B for the maximum diffraction intensity $I_A$ at a diffraction angle $2\theta$ of 43.00° or more and 44.30° or less obtained by thin film X-ray diffractometry performed on the surface of the Fe-Ni diffusion layer is 0.35 or more.

3. The surface-treated steel sheet according to claim 1 or 2,
   wherein the Fe-Ni diffusion layer has a thickness of 0.5 to 4 $\mu$m.

4. The surface-treated steel sheet according to any one of claims 1 to 3, wherein the amount of Ni deposited on the steel sheet is 1.78 to 8.9 $g/m^2$.

5. The surface-treated steel sheet according to any one of claims 1 to 4, wherein the steel sheet has a thickness of 0.03 to 0.9 mm.

6. A battery container produced by forming and processing the surface-treated steel sheet according to any one of claims 1 to 5 such that a surface thereof including the Fe-Ni diffusion layer formed as the topmost surface faces the inside of the battery container.

Fig. 1

surface-treated steel sheet

Fe-Ni diffusion layer

steel sheet

Fig. 2

Fig. 3

Fig. 4

Fig. 5

Fig. 6

Fig. 7

Fig. 8

counter electrode   reference electrode

electrolyte solution

measured surface

surface-treated steel sheet

## INTERNATIONAL SEARCH REPORT

International application No.

**PCT/JP2023/038957**

| A. | CLASSIFICATION OF SUBJECT MATTER |
|---|---|

***C25D 5/26***(2006.01)i; ***C25D 5/50***(2006.01)i
FI:  C25D5/50; C25D5/26 A

According to International Patent Classification (IPC) or to both national classification and IPC

| B. | FIELDS SEARCHED |
|---|---|

Minimum documentation searched (classification system followed by classification symbols)

C25D5/26; C25D5/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | JP 2012-201949 A (NISSHIN STEEL CO., LTD.) 22 October 2012 (2012-10-22) paragraphs [0039]-[0048], fig. 1-5 | 1-5 |
| Y | | 6 |
| Y | JP 7060186 B1 (NIPPON STEEL CORP.) 26 April 2022 (2022-04-26) paragraphs [0094]-[0114], fig. 10, 11 | 6 |
| A | JP 2014-077175 A (NISSHIN STEEL CO., LTD.) 01 May 2014 (2014-05-01) paragraphs [0014]-[0016], fig. 1-4 | 1-6 |
| A | SANATY-ZADEH, A., Properties of nanocrystalline iron-nickel alloys fabricated by galvano-static electrodeposition, Journal of Alloys and Compounds, 30 May 2009, vol. 485, pp. 402-407 p. 403, right column, line 5 to p. 404, left column, line 25, fig. 2, 3 | 1-6 |
| A | WO 2016/013572 A1 (NIPPON STEEL & SUMITOMO METAL CORP.) 28 January 2016 (2016-01-28) paragraphs [0079]-[0102] | 1-6 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 December 2023** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/038957**

| Patent document cited in search report | | | Publication date (day/month/year) | Patent family member(s) | | | Publication date (day/month/year) |
|---|---|---|---|---|---|---|---|
| JP | 2012-201949 | A | 22 October 2012 | (Family: none) | | | |
| JP | 7060186 | B1 | 26 April 2022 | WO | 2022/118768 | A1 | |
| | | | | CN | 116670335 | A | |
| | | | | KR | 10-2023-0113591 | A | |
| JP | 2014-077175 | A | 01 May 2014 | (Family: none) | | | |
| WO | 2016/013572 | A1 | 28 January 2016 | US | 2017/0162836 | A1 | |
| | | | | paragraphs [0146]-[0179] | | | |
| | | | | KR | 10-2017-0031698 | A | |
| | | | | CN | 106605312 | A | |
| | | | | TW | 201610178 | A | |

Form PCT/ISA/210 (patent family annex) (January 2015)

**REFERENCES CITED IN THE DESCRIPTION**

**Patent documents cited in the description**

- JP 2014047359 A